# EUROPEAN PATENT APPLICATION

(11) **EP 3 723 234 A1**
(43) Date of publication of application: **14.10.2020**
(21) Application number: 19168156.8
(22) Date of filing: 09.04.2019
(51) Int. Cl.: H02J 7/34, H05B 1/02, H05B 6/06, H02J 7/35, H02J 1/10

(54) **SYSTEM AND METHOD FOR SUPPLYING POWER TO ELECTRIC APPARATUS, AND ELECTRIC APPARATUS**

(71) Applicant: ELECTROLUX APPLIANCES AKTIEBOLAG, 105 45 Stockholm (SE)
(72) Inventor: ZANGOLI, Massimo, 47122 Forli (IT); FORTI, Michele, 47122 Forli (IT); URGESE, Emanuel, 47100 Forli (IT); VIROLI, Alex, 47122 Forli (IT); NOSTRO, Massimo, 47122 Forli (IT)
(74) Representative: Electrolux Group Patents

(57) **Abstract**

The present disclosure relates to a system (100) and method for supplying power to an electric apparatus (200), and an electric apparatus (200). The system (100) according to the present disclosure comprises: a first power supply unit (101) configured to supply power to the electric apparatus using a mains network; a second power supply unit (102) configured to supply power to the electric apparatus using an additional power source; and a control unit (103) configured to combinedly use, in a case where the power supplied by the first power supply cannot satisfy requirements of the electric apparatus, the first power supply unit and the second power supply unit to supply power to the electric apparatus. Through the system according to the present disclosure, it is still possible to cause the electric apparatus to normally operate, in a case where power supplied by the mains network is limited.

## Description

### FIELD OF THE INVENTION

The present disclosure relates generally to the technical field of electric apparatuses, and more particularly to a system and method for supplying power to an electric apparatus, and an electric apparatus.

### BACKGROUND OF THE INVENTION

At present, high-power electric apparatuses which perform cooking with power, such as induction cookers, electric ovens and the like, have been more and more popular due to advantages such as high efficiency, no pollution and the like. However, such electric apparatuses often need greater power supply, whereas the capacity of the mains networks to which ordinary families are connected is limited, thus making it often difficult to satisfy power demands of the electric apparatuses, thereby resulting in deteriorations in performances of the electric apparatuses.

Thus, a technique for supplying power to an electric apparatus is needed.

### SUMMARY OF THE INVENTION

A brief summary of the present disclosure is given below to provide a basic understanding of some aspects of the present disclosure. However, it should be understood that the summary is not an exhaustive summary of the present disclosure. It does not intend to define a key or important part of the present disclosure, nor does it intend to limit the scope of the present disclosure. The object of the summary is only to briefly present some concepts of the present disclosure, which serves as a preamble of the more detailed description that follows.

In view of the foregoing problem, an object of at least one aspect of the present disclosure is to provide a system and method for supplying power to an electric apparatus, such that it is possible to supply additional power to the electric apparatus in a case where power supplied by a main power source cannot satisfy power demands of the electric apparatus, so as to improve operation performances of the electric apparatus.

According to an aspect of the present disclosure, there is provided a system for supplying power to an electric apparatus, comprising: a first power supply unit configured to supply power to the electric apparatus using a main power source; a second power supply unit configured to supply power to the electric apparatus using an additional power source; and a control unit configured to combinedly use, in a case where the power supplied by the first power supply cannot satisfy requirements of the electric apparatus, the first power supply unit and the second power supply unit to supply power to the electric apparatus.

According to another aspect of the present disclosure, there is provided a method for supplying power to an electric apparatus, comprising: determining whether power supplied from a first power supply unit to the electric apparatus can satisfy requirements of the electric apparatus, wherein the first power supply unit supplies power to the electric apparatus using a main power source; combinedly using, in a case where it is determined that the power supplied from the first power supply unit to the electric apparatus cannot satisfy the requirements of the electric apparatus, the first power supply unit and a second power supply unit to supply power to the electric apparatus, wherein the second power supply unit supplies power to the electric apparatus using an additional power source.

In addition, an object of at least one aspect of the present disclosure is to provide an electric apparatus which operates by combinedly using an additional power supply unit, in a case where power supplied from a main power source cannot satisfy power requirements, so as to improve operation performances.

According to still another aspect of the present disclosure, there is provided an electric apparatus, comprising: an additional power supply unit configured to supply power to the electric apparatus using an additional power source; and an additional control unit configured to combinedly use, in a case where power supplied from a main power source to the electric apparatus cannot satisfy requirements of the electric apparatus, the additional power supply unit to supply power to the electric apparatus.

According to other aspects of the present disclosure, there is further provided a computer program code and a computer program product for implementing the above described method according to the present disclosure or the functions of the corresponding apparatus, and a computer readable storage medium having recorded thereon the computer program code for implementing the above described method according to the disclosure.

According to embodiments of the present disclosure, even if in a case where power supplied by a main power source cannot satisfy power demands of an electric apparatus, it is possible to supply additional power to the electric apparatus, so as to improve operation performances of the electric apparatus.

Other aspects of embodiments of the present disclosure will be given in the following specification part, wherein preferred embodiments for sufficiently disclosing embodiments of the present disclosure are described in detail, without applying limitations thereto.

### BRIEF DESCRIPTION OF THE DRAWINGS

The above and other objects, features and advantages of the present disclosure will be more easily understood from the following description of embodiments of the present disclosure combined with the appended drawings. In the appended drawings:
FIG. 1 is a block diagram showing a system for supplying power to an electric apparatus according to an embodiment of the present disclosure;
FIG. 2 is a schematic view of an exemplary configuration in which a system for supplying power to an electric apparatus according to an embodiment of the present disclosure is applied to an electric apparatus;
FIG. 3 is a flowchart of a method for supplying power to an electric apparatus according to an embodiment of the present disclosure; and
FIG. 4 is a block diagram of an electric apparatus according to an embodiment of the present disclosure.

### EMBODIMENTS OF THE INVENTION

Hereinafter, some implementations of the present disclosure will be described in detail with reference to the appended illustrative drawings. When elements in the drawings are denoted by reference signs, although identical elements are shown in different figures, identical elements will be denoted by identical reference signs. In addition, in the following description of the present disclosure, detailed description of known functions and configurations herein will be omitted while it is possible to make the subject matter of the present disclosure unclear.

The terms used herein are used only for the purpose of describing specific implementations, but are not intended to limit the present disclosure. The singular forms used herein may also include plural forms, unless otherwise indicated. It will also be understood that the terms "comprise", "include" and "have" used in the description are intended to specifically refer to existence of the features, entities, operations and/or components as described but do not exclude existence or addition of one or more other features, entities, operations and/or components.

All the terms including technical terms and scientific terms used herein have identical meanings to those generally understood by those skilled in the field to which the present inventive concept pertains, unless otherwise defined. It will be further understood that terms such as those defined in a commonly used dictionary should be construed as having meanings consistent with their meanings in the context in a related field and, unless explicitly defined herein, should not be construed as having ideal or too formal meanings.

The description below explains plenty of specific details to provide comprehensive understanding to the present disclosure. The present disclosure can be implemented without some or all of these specific details. In other embodiments, to avoid the present disclosure from being obscured due to unnecessary details, only those components closely related to the solution according to the present disclosure are shown in the appended drawings, while omitting other details not closely related to the present disclosure

Hereinafter, a system and method for supplying power to an electric apparatus, and an electric apparatus according to embodiments of the present disclosure will be described in detail with reference to the appended drawings.

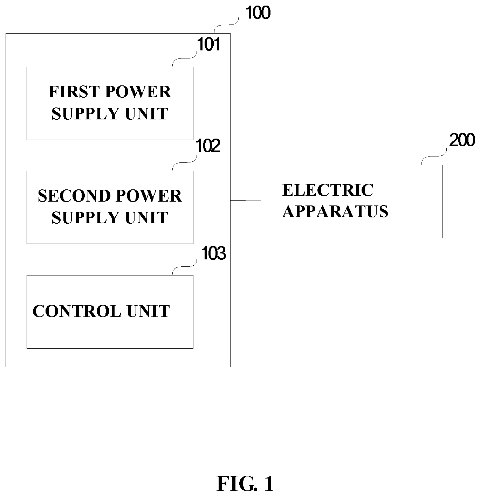

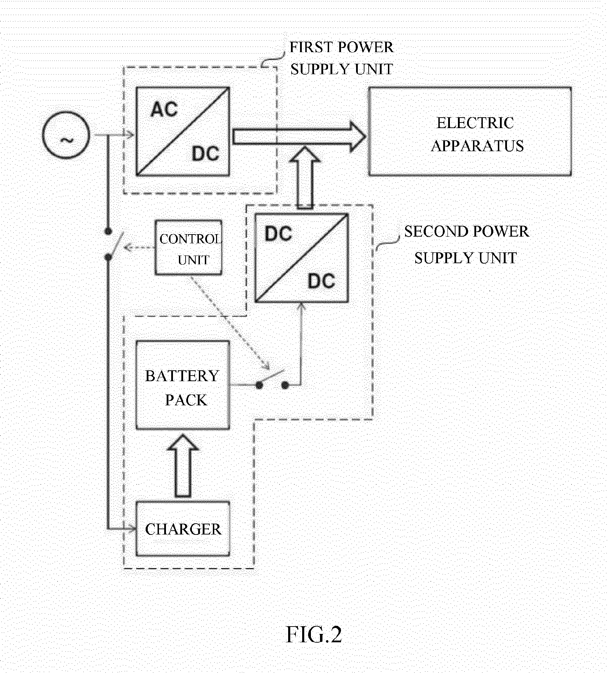

FIG. 1 shows, in a form of a block diagram, a system 100 for supplying power to an electric apparatus 200 according to an embodiment of the present disclosure, and FIG. 2 is a schematic view showing an implementation example in which the system 100 is applied to the electric apparatus 200.

As shown in FIG. 1, the system 100 according to the embodiment of the present disclosure is used for supplying power to an electric apparatus 200, and the system 100 can comprise a first power supply unit 101, a second power supply unit 102 and a control unit 103.

As shown in FIG. 1 and FIG. 2, the first power supply unit 101 can supply power to the electric apparatus 200 using a main power source. For example, the main power source may be a mains network. According to an embodiment of the present disclosure, in a case where the electric apparatus 200 operates with DC power, for example is an induction cooker, the first power supply unit 101 can comprise an AC-DC converter for converting AC power from the mains network to DC power adapted for operation of the electric apparatus 200.

As shown in FIG. 1 and FIG. 2, the second power supply unit 102 can supply power to the electric apparatus 200 using an additional power source. According to an embodiment of the present disclosure, the additional power source can be a battery pack. For example, the battery pack can be a stack of lithium batteries (for example lithium polymer batteries or lithium iron batteries), wherein the number of battery cells can be determined according to power needed by the electric apparatus 200 or the capacity of a single battery cell.

For example, as to an induction cooker as an example of the electric apparatus 200, it is generally required that a battery pack can provide a voltage of 300-330V. Lithium batteries presently available generally have a rated voltage of 3.2V, and have the capacity with the magnitude of several thousands of milliamperes (mAh); thus, the battery pack can comprise about 100 lithium batteries in series, and thereby is capable of supplying a voltage of 320V to the induction cooker.

According to an embodiment of the present disclosure, when power is supplied to the electric apparatus 200 using a battery pack with the configuration as described above, the battery pack can adjust a magnitude and a time of its output in association with power needed by the electric apparatus 200. For example, assuming that battery pack is composed of 100 series-connected batteries with rated voltage of 3.2V and capacity of 4000mAh, the battery pack can output for example a current of 8A for 30 minutes, or a current of 4A for one hour, or a current of 2A for two hours, etc. The second power supply unit 102 using the battery pack as an additional power source can supply power of up to 1.3kW to the electric apparatus 200. When power supplied by the main power source used by the first power supply unit 101 is limited and thus cannot satisfy requirements of the electric apparatus 200, it is possible to supply power to the electric apparatus 200 using power supplied by the first power supply unit 101 and the second power supply unit 102 together, such that the electric apparatus 200 can operate with optimal performances.

In addition, according to an embodiment of the present disclosure, it is possible to adjust the number of the batteries and the connection manner (parallel connection or series connection) of the batteries in the battery pack according to actual requirements, so as to make it possible to provide different magnitudes and times of the output.

In addition, according to an embodiment of the present disclosure, in a case where an electronic device needing consumption of power, for example a volatile memory, is arranged in the electric apparatus 200, it is possible to supply power to the electric apparatus 200 by using the second power supply unit 102 independently, such that standby power consumption of the whole system is minimum.

As shown in FIG. 1 and FIG. 2, according to an embodiment of the present disclosure, the second power supply unit 102 can comprise a DC-DC converter for converting DC power from the battery pack to DC power adapted for operation of the electric apparatus 200.

As shown in FIG. 1 and FIG. 2, according to an embodiment of the present disclosure, the second power supply unit 102 can comprise a charger for charging the battery pack using an external power source . For example, the charger can charge the battery pack through the external source in a period during which the electric apparatus 200 does not operate.

According to an embodiment of the present disclosure, for example, the external power source for charging the battery pack through the charger can be the mains network or a photovoltaic power generation apparatus or the like.

As shown in FIG. 1 and FIG. 2, the control unit 103 can combinedly use, in a case where the power supplied by the first power supply 101 cannot satisfy requirements of the electric apparatus 200, the first power supply unit and the second power supply unit to supply power to the electric apparatus 200.

For example, as shown in FIG. 2, the control unit 103 can control a switch arranged on a connection circuit between the battery pack and the DC-DC converter of the second power supply unit 102, so as to control power supply to the electric apparatus 200 by the second power supply unit 102.

In addition, the control unit 103 can control a switch arranged on a connection circuit between the charger and the mains network of the second power supply unit 102, so as to control charging of the battery pack of the second power supply unit 102 by the mains network.

In addition, although not shown, the control unit 103 can also comprise a sensor for sensing an operation state of the electric apparatus 200 to determine whether it is necessary to combinedly use the second power supply unit 102 to supply power to the electric apparatus 200. In addition, in a case where it is determined that it is necessary to combinedly use the second power supply unit 102 to supply power to the electric apparatus 200, the control unit 103 may determine a magnitude and a time of power supply to the electric apparatus 200 by the second power supply unit 102 according to the sensing result of the sensor.

In addition, in a case where the electric apparatus 200 comprises a communication interface capable of sending a signal representing its operation state, the control unit 103 can comprise a corresponding communication interface to receive the signal sent by the electric apparatus 200, so as to perform its control according to the signal.

Through the system for supplying power to an electric apparatus according to the embodiment of the disclosure as described above, it is made possible to supply additional power to the electric apparatus, in a case where power supplied by the main power source is insufficient to satisfy power demands of the electric apparatus, so as to improve operation performances of the electric apparatus.

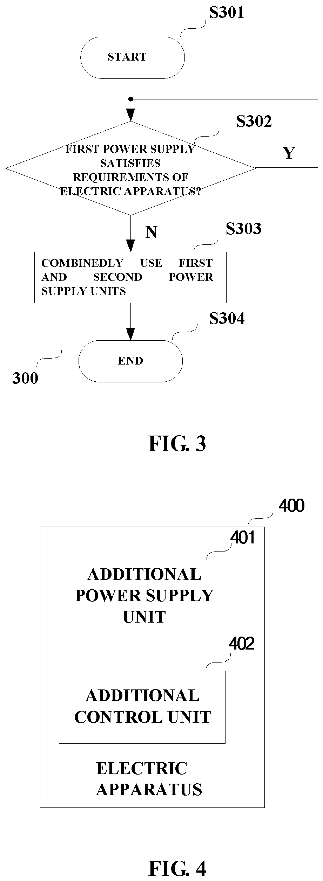

Correspondingly, the present disclosure further proposes a method 300 for supplying power to an electric apparatus. FIG. 3 is a flowchart of the method 300 for supplying power to an electric apparatus according to an embodiment of the present disclosure.

As shown in FIG. 3, the method 300 starts from step S301. Subsequently, in step S302, it is determined whether power supplied from a first power supply unit to the electric apparatus can satisfy requirements of the electric apparatus, wherein the first power supply unit supplies power to the electric apparatus using a main power source.

If it is determined in step S302 that the power supplied from the first power supply unit to the electric apparatus cannot satisfy the requirements of the electric apparatus, the method 300 proceeds to step S303, in which the first power supply unit and a second power supply unit are combinedly used to supply power to the electric apparatus, wherein the second power supply unit supplies power to the electric apparatus using an additional power source. Subsequently, the method 300 ends with step S304.

If it is determined in step S302 that the power supplied from the first power supply unit to the electric apparatus can satisfy the requirements of the electric apparatus, the method 300 returns to step S302.

The method 300 as shown in FIG. 3 can be implemented through the system 100 for supplying power to the electric apparatus 200 as described above with reference to FIG. 1 and FIG. 2, and thus no more detailed description of details of the method 300 will be made.

Through the system and method for supplying power to an electric apparatus according to the embodiment of the disclosure as described above, it is made possible to supply additional power to the electric apparatus, in a case where power supplied by the main power source is insufficient to satisfy power demands of the electric apparatus, so as to improve operation performances of the electric apparatus.

In addition, the present disclosure further proposes an electric apparatus 400, in which the foregoing second power supply unit 102 and the foregoing control unit 103 are integrated. FIG. 4 is a block diagram of the electric apparatus 400 according to an embodiment of the present disclosure.

As shown in FIG. 4, the electric apparatus 400 can comprise: an additional power supply unit 401 for supplying power to the electric apparatus 400 using an additional power source; and an additional control unit 402 configured to combinedly use, in a case where power supplied from a main power source to the electric apparatus 400 cannot satisfy requirements of the electric apparatus 400, the additional power supply unit 401 to supply power to the electric apparatus 400.

The additional power supply unit 401 and the additional control unit 402 can have identical structures and functions to the second power supply unit 102 and the foregoing control unit 103 as described above, respectively, and thus no further detailed description will be made herein.

According to an embodiment of the present disclosure, the additional power supply unit 401 and the additional control unit 402 can be configured to be integrated in the electric machine 400 in a compact manner, such that the electric apparatus has an outline dimension as small as possible. For example, in a case where the electric apparatus 400 is an induction cooker, the additional power supply unit 401 having a battery pack may be arranged under a cooker surface of the induction cooker so as to maintain a dimension consistent with the cooker surface, such that the whole of the induction cooker has a small outline dimension.

In addition, the function of the additional control unit 402 may be integrated into the function of an original control unit of the electric apparatus 400, or the additional control unit 402 may control the additional power supply unit 401 as a separate control unit.

The above described electric apparatus according to the embodiment of the present disclosure can combinedly use, in a case where power supplied from a main power source cannot satisfy its power demands, the additional power supply unit to operate, such that operation performances of the electric apparatus are ensured.

Although the electric apparatus has been described above by taking the induction cooker as an example, those skilled in the art should appreciate that the technique of the present disclosure can also be applied to other electric apparatuses than the induction cooker.

In addition, the present disclosure further proposes a program product having stored thereon machine readable instruction codes that, when read and executed by a machine, can implement the above described method for supplying power to an electric apparatus according to the present disclosure. For example, the program product may be performed by the control unit and the additional control unit as described above . Accordingly, various storage media for carrying such a program product which have been listed above are also included within the scope of the present disclosure.

Specific implementations of the apparatus and/or method according to the present disclosure have been explicitly described above by making detailed description by way of block diagrams, flowcharts and/or implementations. When these block diagrams, flowcharts and/or implementations include one or more functions and/or operations, those skilled in the art appreciate that various functions and/or operations in these block diagrams, flowcharts and/or implementations can be implemented separately and/or jointly through various hardware, software, firmware, or any substantive combination thereof. In one implementation, several portions of the subject matter described in the specification can be implemented through Application Specific Integrated circuit (ASIC), Field Programmable Gate Array (FPGA), Digital Signal Processor (DSP) or other integration manners.

It should be emphasized that, the term "comprise/include" used herein refers to existence of features, elements, steps or assemblies, but does not exclude existence or addition of one or more other features, elements, steps or assemblies. Terms "first" , "second" and the like relating to ordinal numbers do not represent implementation orders or importance degrees of the features, elements, steps or assemblies defined by these terms, but aim only to perform identification among these features, elements, steps or assemblies for the sake of clarity.

Although the present disclosure has been described above by making description of the specific implementations of the present disclosure, it should be noted that those skilled in the art can design various modifications, improvements or equivalents of the present disclosure within the spirit and scope of the appended claims. These modifications, improvements or equivalents should also be regarded as being included within the scope of protection of the present disclosure.

## Claims

1. A system for supplying power to an electric apparatus, comprising:
a first power supply unit configured to supply power to the electric apparatus using a main power source;
a second power supply unit configured to supply power to the electric apparatus using an additional power source; and
a control unit configured to combinedly use, in a case where the power supplied by the first power supply cannot satisfy requirements of the electric apparatus, the first power supply unit and the second power supply unit to supply power to the electric apparatus.

2. The system according to claim 1, wherein
the main power source is a mains network.

3. The system according to claim 2, wherein
the electric apparatus operates with DC power,
the first power supply unit comprises an AC-DC converter for converting AC power from the mains network to DC power adapted for operation of the electric apparatus.

4. The system according to any one of claims 1 to 3, wherein
the second power supply unit comprises a battery pack as the additional power source.

5. The system according to claim 4, wherein
the second power supply unit comprises a DC-DC converter for converting DC power from the battery pack to DC power adapted for operation of the electric apparatus.

6. The system according to claim 4, wherein
the second power supply unit comprises a charger for charging the battery pack using an external power source.

7. The system according to claim 6, wherein
the external power source is a mains network or a photovoltaic power generation apparatus.

8. The system according to claim 1 or 2, wherein
the electric apparatus is an induction cooker.

9. The system according to any one of claims 1 to 3, wherein
in a case where an electronic device needing consumption of power is arranged in the electric apparatus, the second power supply unit supplies power to the electric apparatus independently.

10. The system according to any one of claims 1 to 3, wherein
the control unit comprises a sensor for sensing an operation state of the electric apparatus to determine whether it is necessary to combinedly use the second power supply unit to supply power to the electric apparatus.

11. The system according to claim 10, wherein
in a case where it is determined that it is necessary to combinedly use the second power supply unit to supply power to the electric apparatus, the control unit determines a magnitude and a time of power supply to the electric apparatus by the second power supply unit according to the sensing result of the sensor.

12. The system according to any one of claims 1 to 3, wherein
in a case where the electric apparatus comprises a communication interface capable of sending a signal representing its operation state, the control unit comprises a corresponding communication interface to receive the signal sent by the electric apparatus, so as to perform its control according to the signal.

13. A method for supplying power to an electric apparatus, comprising:
determining whether power supplied from a first power supply unit to the electric apparatus can satisfy requirements of the electric apparatus, wherein the first power supply unit supplies power to the electric apparatus using a main power source;
combinedly using, in a case where it is determined that the power supplied from the first power supply unit to the electric apparatus cannot satisfy the requirements of the electric apparatus, the first power supply unit and a second power supply unit to supply power to the electric apparatus, wherein the second power supply unit supplies power to the electric apparatus using an additional power source.

14. An electric apparatus, comprising:
an additional power supply unit configured to supply power to the electric apparatus using an additional power source; and
an additional control unit configured to combinedly use, in a case where power supplied from a main power source to the electric apparatus cannot satisfy requirements of the electric apparatus, the additional power supply unit to supply power to the electric apparatus.

15. The electric apparatus according to claim 14, wherein
the electric apparatus comprises the system for supplying power to the electric apparatus according to any one of claims 1 to 12, and the additional power supply unit is configured to perform an operation of the second power supply unit, and the additional control unit is configured to perform an operation of the control unit.

16. The electric apparatus according to claim 14, wherein
the electric apparatus is an induction cooker, and
the additional power supply unit is arranged under a cooker surface of the induction cooker so as to maintain a dimension consistent with the cooker surface.
